# EUROPÄISCHE PATENTSCHRIFT

(11) **EP 3 595 972 B1**
(45) Veröffentlichungstag und Bekanntmachung des Hinweises auf die Patenterteilung: **06.04.2022**
(21) Anmeldenummer: 18712111.6
(22) Anmeldetag: 08.03.2018
(51) Int. Cl.: B65B 1/04, B65G 47/00, B65B 5/10, B65B 35/22, B65B 57/20

(54) **AUTOMATISIERTE FÖRDEREINRICHTUNG**
AUTOMATED CONVEYOR
CONVOYEUR AUTOMATIQUE

(30) Priorität: 17.03.2017 DE 102017105791
(43) Veröffentlichungstag der Anmeldung: 22.01.2020
(73) Patentinhaber: Dickfeld, Nils, 64665 Alsbach-Hähnlein (DE)
(72) Erfinder: Dickfeld, Nils, 64665 Alsbach-Hähnlein (DE)
(74) Vertreter: Habermann Intellectual Property Partnerschaft von Patentanwälten mbB
(86) Internationale Anmeldenummer: PCT/EP2018/055809
(87) Internationale Veröffentlichungsnummer: WO 2018/166894

(56) Entgegenhaltungen:
- WO-A2-03/097459
- JP-A- 2006 335 460
- US-A- 3 597 852
- US-A- 4 094 129
- US-A1- 2007 289 660
- US-A1- 2014 318 086

## Beschreibung

Die Erfindung betrifft eine automatisierte Fördereinrichtung für tablettenförmige Produkte, beispielsweise Süßwaren, pharmazeutische Tabletten oder Kapseln, die ein zeilenbildendes Förderband aufweist, auf welchem die tablettenförmigen Produkte in voneinander getrennten Zeilen quer zur einer Förderrichtung des Förderbandes gelagert und in Förderrichtung transportiert werden, wobei die automatisierte Fördereinrichtung eine an einem ersten Ende des Förderbands angeordnete Aufgabeeinrichtung zum Aufgeben der tablettenförmigen Produkte auf das Förderband, eine optische Erfassungseinrichtung zur automatisierten Erfassung einzelner tablettenförmige Produkte auf dem Förderband und eine an einem dem ersten Ende gegenüberliegenden zweiten Ende des Förderbands angeordnete Abfülleinrichtung aufweist, mit welcher die tablettenförmigen Produkte von dem Förderband in einen Abfüllbehälter überführt werden können, wobei die Aufgabeeinrichtung eine an einer Oberseite des Förderbandes angrenzende Aufgabeöffnung aufweist, die sich quer zu der Förderrichtung des Förderbands erstreckt und durch welche die tablettenförmigen Produkte auf die Oberseite des Förderbands aufgegeben werden können, wobei die Aufgabeeinrichtung eine spurenbildende Separationseinrichtung aufweist, mit welcher die tablettenförmigen Produkte in mehreren Spuren nebeneinander auf die Oberseite des Förderbands aufgegeben werden, und wobei in Förderrichtung nach der optischen Erfassungseinrichtung einer Aussonderungseinrichtung angeordnet ist, mit welcher einzelne tablettenförmige Produkte von dem Förderband ausgesondert werden können.

Aus der Praxis sind verschiedene automatisierte Fördereinrichtungen bekannt, mit welchen tablettenförmige Produkte aus einem Vorratsbehälter zu einer Abfüllanlage oder zu einem weiteren Behälter gefördert werden können. Bei konstruktiv einfach ausgestalteten Fördereinrichtungen weist die Fördereinrichtung im Wesentlichen ein endlos umlaufendes Förderband auf, auf welchem die einzelnen tablettenförmigen Produkte angeordnet und zu der dafür vorgesehenen Abfülleinrichtung oder zu dem weiteren Behälter befördert werden können. Dabei kann während der Beförderung der tablettenförmigen Produkte eine manuelle Kontrolle der einzelnen tablettenförmigen Produkte und eine ebenfalls üblicherweise manuell durchgeführte Aussonderung fehlerhafter tablettenförmiger Produkte erfolgen. Die regelmäßig von einer Kontrollperson durchgeführte Kontrolle kann dabei verschiedene Kriterien wie beispielsweise die Formgebung oder die Farbgebung der tablettenförmigen Produkte berücksichtigen und durch manuelles Aussortieren von diese Kriterien nicht erfüllenden Produkten bewirken, dass ausschließlich tablettenförmige Produkte der Abfülleinrichtung bzw. dem weiteren Behälter zugeführt werden, welche die vorgegebenen Kriterien erfüllen. Eine manuelle Kontrolle und Aussonderung durch eine Kontrollperson ist sehr aufwändig und schränkt die maximal mögliche Förderkapazität der Fördereinrichtung stark ein. Es sind Förderbänder bekannt, die ein Rollenband mit quer zur Förderrichtung ausgerichteten und in Förderrichtung beabstandet angeordneten, drehbar gelagerten Rollen aufweisen. Ein Abschnitt zwischen zwei benachbarten Rollen ist dabei geringer als ein kleinster Durchmesser der zu fördernden tablettenförmigen Produkte, sodass sich die tablettenförmigen Produkte in voneinander getrennten quer zu der Förderrichtung verlaufenden Zeilen im Wesentlichen selbsttätig anordnen und in den voneinander getrennten Zeilen, die durch die Ausrichtung der beabstandet angeordneten Rollen vorgegeben werden, in Förderrichtung transportiert werden. Durch die Anordnung der tablettenförmigen Produkte in voneinander getrennten Zeilen kann eine manuelle Kontrolle und die Aussonderung fehlerhafter Produkte erleichtert werden.

Aus der Praxis sind weiterhin Aufgabeeinrichtungen bekannt, bei denen die der Fördereinrichtung zugeführten tablettenförmigen Produkte über ein vibrierendes Rüttelblech mit einer geringen Neigung dem Förderband zugeführt werden. Nach oben ragende Seitenwände des Rüttelblechs umgeben einen Innenraum eines Aufgabebehälters, der in Förderrichtung eine dem Förderband zugewandte Aufgabeöffnung aufweist, durch welche die einzelnen tablettenförmigen Produkte auf das Förderband gelangen. Um zu verhindern, dass die tablettenförmigen Produkte in mehreren Lagen übereinander auf das Förderband gelangen und dadurch eine visuelle Inspektion und Kontrolle durch eine Kontrollperson erschweren, muss üblicherweise eine ausreichend geringe Fördergeschwindigkeit bzw. Förderkapazität vorgegeben werden und die Rüttelbewegung der Aufgabeeinrichtung daran angepasst sein, sodass nicht zu viele tablettenförmige Produkte gleichzeitig in die einzelnen Zeilen des Förderbandes aufgegeben werden.

Aus der Praxis sind weiterhin Fördereinrichtungen bekannt, die über Vibratoren, Drehscheiben oder Förderbänder in Zusammenhang mit Produktzählvorichtungen und ansteuerbaren Klappen oder Weichen vorgebbare und in Portionen abgezählte Mengen automatisch oder halbautomatisch in bereitgestellte Behälter abfüllen. Die aus der Praxis bekannten Fördereinrichtungen sind konstruktiv aufwendig und während des Betriebs fehleranfällig.

Beispielsweise aus US 3,597,852 ist eine automatisierte Fördereinrichtung bekannt, mit welcher mehrere jeweils in eine Folie verpackte Münzenrollen mit Hilfe eines Rollenbands befördert werden können und durch eine Rotationsbewegung der einzelnen Rollen des Rollenbands die Münzenrollen konsolidiert und besser verpackt werden können. Eine Kontrolle einzelner Münzen ist nicht vorgesehen oder möglich. Zudem könnten fehlerhafte Münzen nicht einzeln aussortiert werden.

In JP 2006 335460 A ist eine Fördereinrichtung bekannt, mit welcher längliche Nahrungsmittelprodukte zwischen zwei benachbart angeordneten Rollen eines Rollenbands in eine Verpackungsstation befördert werden. Fehlerhafte längliche Nahrungsmittelprodukte fallen durch den Zwischenraum zwischen zwei benachbarten Rollen des Rollenbands hindurch und werden dadurch automatisch ausgesondert. Eine automatisierte optische Kontrolle einzelner Nahrungsmittelprodukte oder eine gezielte Aussonderung einzelner Nahrungsmittelprodukte aus dem Förderband ist nicht vorgesehen und auch nicht möglich.

Aus US 4 094 129 A ist eine automatisierte Fördereinrichtungen der eingangs genannten Gattung bekannt, mit welcher tablettenförmige Produkte automatisiert auf ein Förderband aufgegeben und von dem Förderband in einen Behälter abgefüllt werden können. Das Förderband ist dabei als Lochband ausgebildet, wobei jedes Loch mit einem tablettenförmigen Produkt befüllt werden soll. Falls mit einer Prüfeinrichtung festgestellt wird, dass in einer Zeile des Lochbands nicht alle Löcher mit einem tablettenförmigen Produkt befüllt sind werden mit einer Aussonderungseinrichtung alle tablettenförmigen Produkte in dieser Zeile aus dem Lochband ausgesondert. Eine automatisierte Kontrolle einzelner tablettenförmiger Produkte und eine gezielte Aussonderung fehlerhafter tablettenförmiger Produkte ist nicht vorgesehen und auch nicht möglich.

Es wird als eine Aufgabe der vorliegenden Erfindung angesehen, eine automatisierte Fördereinrichtung so auszugestalten, dass mit möglichst einfachen konstruktiven Mitteln eine automatisierte Erfassung der auf dem Förderband geförderten tablettenförmigen Produkte ermöglichst wird, um fehlerhafte Produkte automatisiert zu identifizieren und einzeln aussondern zu können.

Diese Aufgabe wird erfindungsgemäß durch eine automatisierte Fördereinrichtung gelöst, dass das Förderverband ein Rollenband mit quer zu der Förderrichtung ausgerichteten und in Förderrichtung beabstandet angeordneten, drehbar gelagerten Rollen aufweist, wobei ein Abstand zwischen zwei benachbarten Rollen geringer als einen kleinster Durchmesser der zu fördernden tablettenförmigen Produkte ist, dass die Rollen während einer Förderbewegung des Förderbands in einer Rotationsrichtung angetrieben sind, sodass durch eine Rotationsbewegung der Rollen die darauf angeordneten tablettenförmigen Produkte in eine entgegengesetzte Rotationsbewegung versetzt werden.

Auf diese Weise können die einzelnen tablettenförmigen Produkte während einer Förderbewegung des Förderbands um eine Rotationsachse verdreht werden, sodass die tablettenförmigen Produkte mit einer ortsfest über dem Förderband angeordneten optischen Kotrolleinrichtung von allen Seiten aufgenommen und kontrolliert werden können. Zudem begünstigt die Rotationsbewegung der Rollen die zeilenförmigen Anordnung der tablettenförmigen Produkte zwischen zwei benachbarten Rollen, sodass im Bereich der Aufgabeeinrichtung mit vergleichsweise geringem konstruktiven Aufwand die Aufgabe einer einzelnen Lage von tablettenförmigen Produkten auf die Oberseite des durch das Rollenband gebildeten Förderbands unterstützt wird.

Mit der erfindungsgemäßen automatisierten Fördereinrichtung können beliebige tablettenförmige Produkte befördert werden, sodass die Verwendung der Fördereinrichtung nicht auf Tabletten und Kapseln aus dem Bereich der Pharmazie beschränkt ist. Die erfindungsgemäße Fördereinrichtung eignet sich weiterhin auch zur Beförderung von kugel- und walzenförmigen Produkten sowie zur Beförderung von nussförmigen und eiförmigen Produkten. Im Folgenden wird die erfindungsgemäße Fördereinrichtung im Zusammenhang mit der Beförderung von tablettenförmigen Produkten näher erläutert, ohne dass dadurch eine Beschränkung auf beispielsweise Tabletten zum Ausdruck gebracht werden soll.

Durch die Verwendung eines zeilenbildenden Förderbandes werden die von der Aufgabeeinrichtung auf das Förderband aufgegebenen tablettenförmigen Produkte in voneinander getrennten Zeilen auf dem Förderband gelagert, die quer zu der Fördereinrichtung ausgerichtet sind. In dieser voneinander getrennten zeilenförmigen Anordnung werden die tablettenförmigen Produkte der optischen Erfassungseinrichtung zugeführt, mit welcher eine automatisierte Erfassung der einzelnen tablettenförmigen Produkte auf dem Förderband durchgeführt wird. Die Erfassung kann mit Hilfe geeigneter optische Aufnahmeeinrichtungen wie beispielsweise mit analogen oder digitalen Kameras oder fotografischen Aufnahmeeinrichtungen durchgeführt werden. Dabei kann die optische Erfassungseinrichtung dazu verwendet werden, die auf dem Förderband beförderten tablettenförmigen Produkte zu zählen, um das anschließende Abfüllen mit der am zweiten Ende des Förderbands angeordneten Abfülleinrichtung zu erleichtern und gegebenenfalls automatisiert zu steuern. Erfindungsgemäß ist vorgesehen, dass die optische Erfassungseinrichtung als optische Inspektionseinrichtung betrieben und dazu verwendet wird, die einzelnen tablettenförmigen Produkte zu kontrollieren und zu überprüfen, ob vorgegebene Qualitätskriterien wie beispielsweise eine vorgegebene Formgebung oder Farbgebung eingehalten werden. Falls die vorgegebenen Kriterien durch ein einzelnes tablettenförmiges Produkt nicht erfüllt werden, kann eine optische oder akustische Anzeige erfolgen und dadurch eine Kontrollperson auf das betreffende fehlerhafte tablettenförmigen Produkt aufmerksam machen. Auf diese Weise kann die automatisierte Fördereinrichtung mit einer hohen Förderkapazität betrieben werden und gleichzeitig eine zuverlässige Qualitätskontrolle und Abfüllung der tablettenförmigen Produkte erfolgen. Die Abfülleinrichtung kann derart ausgestaltet sein, dass bei einem kontinuierlichen Betrieb des Förderbands unmittelbar aufeinanderfolgend oder gleichzeitig mehrere Abfüllbehälter befüllt werden können.

So kann die optische Erfassungseinrichtung dazu verwendet werden, die einzelnen tablettenförmigen Produkte hinsichtlich vorgegebener Qualitätskriterien zu kontrollieren und die Aussonderungseinrichtung so anzusteuern, dass diejenigen tablettenförmigen Produkte, welche die vorgegebenen Qualitätskriterien nicht erfüllen, automatisiert von dem Förderband ausgesondert und entnommen werden. Durch eine derartige Aussonderungseinrichtung kann eine vollständig automatisiert ablaufende Kontrolle der auf der Fördereinrichtung beförderten tablettenförmigen Produkte durchgeführt werden, ohne dass eine Kontrollperson mit manuellen Tätigkeiten mitwirken oder eingreifen müsste.

Die Förderbreite des Förderbands ist zweckmäßigerweise ausreichend groß bemessen, sodass mehrere tablettenförmige Produkte nebeneinander in einer einzelnen Zeile des zeilenbildenden Förderbands angeordnet sein können. Dabei ist vorzugsweise vorgesehen, dass mehr als fünf oder mehr als zehn tablettenförmigen Produkte nebeneinander in jeder der Zeilen angeordnet sein können. Durch die spurenbildende Separationseinrichtung wird eine Anordnung der einzelnen tablettenförmigen Produkte in mehreren Spuren nebeneinander auf der Oberseite des Förderbands vorgegeben. Auf dieser Weise kann erreicht werden, dass in jeder Zeile des zeilenbildenden Förderbands eine durch die Separationseinrichtung vorgegebene Anzahl von tablettenförmigen Produkten nebeneinander angeordnet wird. Die nebeneinander angeordneten tablettenförmigen Produkte bilden in der Förderrichtung eine entsprechende Anzahl von Spuren, die nebeneinander auf der Oberseite des Förderbands angeordnet und in Förderrichtung ausgerichtet sind.

Durch eine geeignete Ausgestaltung der spurenbildenden Separationseinrichtung kann gewährleistet werden, dass in jeder Zeile eine übereinstimmende Anzahl von tablettenförmigen Produkten nebeneinander angeordnet ist und das die einzelnen Spuren der tablettenförmigen Produkte in Förderrichtung ausgerichtet und mit einer vorgegebenen Position der einzelnen der tablettenförmigen Produkte in den jeweiligen Zeilen des Förderbands gebildet werden.

Es kann vorgesehen sein, dass die spurenbildende Separationseinrichtung mehrere quer zur Förderrichtung des Förderbands angeordnete Separationselemente aufweist. Die Separationselemente können beispielweise in Förderrichtung ausgerichtete Trennelemente oder Zungen sein, die von oben bis an eine Oberseite des Förderbands heranragen und die in der Förderrichtung durch die Aufgabeöffnung hindurch aus der Aufgabeneinrichtung herausgeförderten tablettenförmigen Produkte zwischen die einzelnen Separationselemente zwingen, um dadurch deren Position nebeneinander in jeder einzelnen Zeile des zeilenbildenden Förderbands vorzugeben. Es ist ebenfalls möglich, dass anstelle oder zusätzlich zu derartigen Trennelementen oder Zungen Kreisscheiben vorgesehen sind, die an einer quer zu der Förderrichtung ausgerichteten Welle drehbar gelagert sind und die ebenfalls bis unmittelbar an die Oberseite des Förderbands heranragen und die tablettenförmigen Produkte zwischen benachbarten Kreisscheiben zwangspositionieren. Die Kreisscheiben können dabei gleichgerichtet oder gegenläufig zu der Förderrichtung des Förderverbands rotieren. Der Abstand der einzelnen Trennelemente oder Zungen, bzw. der Abstand benachbarter Kreisscheiben zueinander ist zweckmäßigerweise etwas größer als eine größte längliche Ausdehnung der tablettenförmigen Produkte.

Die spurenbildende Separationseinrichtung ist zweckmäßigerweise im Bereich der Aufgabeöffnung und insbesondere an einer der Förderrichtung zugewandten Seitenkante der Aufgabenöffnung angeordnet. Es kann zweckmäßig sein, dass beabstandet zu der Aufgabeeinrichtung entlang des Förderwegs des Förderband weitere Separationseinrichtungen so angeordnet sind, dass die bereits spurenförmig auf dem Förderband angeordneten tablettenförmigen Produkte hinsichtlich ihrer Positionen kontrolliert und gegebenenfalls nachgeführt werden, um über die gesamte Förderlänge des Förderbands hinweg die spurenförmige Anordnung der tablettenförmige Produkte sicherstellen zu können.

Um zu verhindern, dass in dem Innenraum der Aufgabeeinrichtung mehrere übereinander angeordnete tablettenförmigen Produkte durch die Aufgabeöffnung hindurch gleichzeitig auf das Förderband aufgegeben werden kann optional vorgesehen sein, dass die Aufgabeeinrichtung im Bereich der Aufgabeöffnung eine Lagenvereinzelungseinrichtung aufweist. Mit der Lagenvereinzelungseinrichtung wird bewirkt, dass ausschließlich eine einzelne Lage von tablettenförmigen Produkten durch die Aufgabeöffnung auf die Oberseite des Förderbands aufgegeben wird. Die Lagenvereinzelungseinrichtung kann beispielsweise durch eine schlitzförmige Ausnehmung in der der Förderrichtung zugewandten Seitenwand der Aufgabeeinrichtung gebildet werden, wobei die Abmessungen der schlitzförmigen Ausnehmung an die Abmessung der tablettenförmigen Produkte so angepasst sind, dass jeweils nur eine einzelne Lage durch die schlitzförmige Ausnehmung die Aufgabeeinrichtung verlassen können und in dem Innenraum noch übereinander geordnete tablettenförmigen Produkte von dem an die schlitzförmige Ausnehmung angrenzenden Wandbereich der Seitenwand abgestreift und in dem Innenraum der Aufgabeeinrichtung zurückgehalten werden. Die schlitzförmige Ausnehmung kann in einem der Oberseite des Förderbands gegenüberliegenden Randbereich der Ausnehmung durch eine höhenverstellbare Blende begrenzt werden, sodass die Abmessung der schlitzförmigen Ausnehmung an unterschiedlich große tablettenförmigen Produkte angepasst werden kann.

Es ist ebenfalls möglich und im Hinblick auf große Förderkapazitäten vorteilhaft, dass in der Aufgabeeinrichtung in der Nähe der schlitzförmigen Ausnehmung, die der Förderrichtung zugewandt ist, an der Seitenkante der Aufgabeöffnung rotierende Bürsten oder Lappenwalzen angeordnet sind, die durch eine der Förderrichtung entgegengesetzte Rotation übereinander angeordnete tablettenförmige Produkte von einer untersten, auf der Oberseite des Förderbands angeordneten Lage von tablettenförmigen Produkten darüber gestapelte Produkte abstreifen und in dem Innenraum der Aufgabeeinrichtung zurückhalten. Die Bürsten oder Lappenwalzen können dabei um eine Drehachse rotieren, die quer zu der Förderrichtung oder in einem Winkel schräg zu der Förderrichtung des Förderbands angeordnet sind.

Das Abstreifen der übereinander auf einer untersten Lage von tablettenförmigen Produkte befindlichen weiteren Produktlagen kann dadurch begünstigt werden, dass das zeilenbildende Förderband für die zeilenförmige Aufnahme von mehreren nebeneinander angeordneten tablettenförmigen Produkten eine dreidimensional strukturierte Vertiefung aufweist, sodass eine Oberseite der in der betreffenden Zeile des Förderbands angeordneten tablettenförmigen Produkte möglichst wenig über eine Oberseite des Förderbands hinausragt.

Eine möglichst zuverlässige und gleichförmige Aufgabe der tablettenförmigen Produkte auf das zeilenbildende Förderband kann dadurch unterstützt und begünstigt werden, dass das Förderband zumindest im Bereich der Aufgabeöffnung der Aufgabeeinrichtung eine in Förderrichtung nach oben ansteigende Ausrichtung aufweist. Die nach oben steigende Ausrichtung des Förderbands im Bereich der Aufgabeöffnung der Aufgabeeinrichtung begünstigt das Abstreifen und Zurückhalten von zunächst noch über einander angeordneten tablettenförmigen Produkten innerhalb des Innenraums der Aufgabeeinrichtung.

Gemäß einer vorteilhaften Ausgestaltung des Erfindungsgedankens ist vorgesehen, dass die optische Erfassungseinrichtung mindestens eine quer zu der Förderrichtung des Förderbands angeordnete und sich über eine Förderbereite der Förderbands erstreckende optische Aufnahmeeinrichtung aufweist. Mit einer derartigen optischen Aufnahmeeinrichtung kann die gesamte Förderbreite des Förderbands mit einer einzigen Aufnahme erfasst und eine optische Kontrolle der darauf angeordneten tablettenförmigen Produkte durchgeführt werden. Auf diese Weise kann eine einzelne Zeile von nebeneinander angeordneten tablettenförmigen Produkten auf dem Förderband im Wesentlichen gleichzeitig optische erfasst und kontrolliert werden. Mit der optischen Erfassungseinrichtung kann auch bei großen Fördergeschwindigkeiten des in Förderrichtung bewegten Förderbands eine zuverlässige Erfassung und Zählung der von dem Förderband beförderten tablettenförmigen Produkte durchgeführt werden. Es kann ebenfalls zweckmäßig sein, dass mehrere optische Aufnahmeeinrichtungen in Förderrichtung des Förderbands beabstandet zueinander angeordnet sind. Die mehreren Aufnahmeeinrichtungen können während einer Förderbewegung der tablettenförmigen Produkte entlang des Förderbands mehrere aufeinanderfolgende Aufnahmen derselben tablettenförmigen Produkte aufnehmen. Es sind auch Aufnahmen aus unterschiedlichen Blickwinkeln relativ zu der Förderrichtung möglich, so dass eine genauere Erfassung und Auswertung der optisch erfassten tablettenförmigen Produkte möglich ist.

Gemäß einer optionalen Ausgestaltung des Erfindungsgedankens ist vorgesehen, dass die optische Erfassungseinrichtung eine seitlich neben dem Förderband angeordnete weitere optische Aufnahmeeinrichtung oder eine Spiegeleinrichtung aufweist, mit welcher eine optische Erfassung der auf dem Förderband beförderten tablettenförmigen Produkte aus einem seitlichen Blickwinkel ermöglicht wird. Auf diese Weise können die einzelnen tablettenförmigen Produkte nicht nur beispielsweise von oberhalb des Förderbands optisch erfasst werden, sondern auch durch seitlich gerichtete optische Aufnahmen erfasst und kontrolliert werden. Dies ist beispielsweise durch eine oder mehrere seitlich neben dem Förderband angeordnete und von der Seite aus auf die tablettenförmigen Produkte gerichteten optischen Aufnahmeeinrichtungen möglich. Es ist ebenfalls denkbar und kostengünstig realisierbar, dass seitlich neben den tablettenförmigen Produkten geeignet ausgerichtete Spiegelelemente angeordnet sind, die einer oberhalb des Förderbands angeordneten optischen Aufnahmeeinrichtung eine Aufnahme der tablettenförmigen Produkte aus einem seitlichen Blickwinkel ermöglicht. Auf diese Weise können die tablettenförmigen Produkte nicht nur in Umfangsrichtung der tablettenförmigen Produkte, sondern auch von den Seiten, bzw. von den jeweiligen Endkappen aus optisch erfasst werden. Insbesondere bei einer derartigen Ausgestaltung kann die optische Erfassungseinrichtung auch als optische Inspektionseinrichtung betrieben werden, mit welcher die Qualität der tablettenförmigen Produkte 6 von mehreren Seiten aus optisch erfasst, überprüft und ausgewertet wird.

Vorzugsweise ist vorgesehen, dass die mindestens eine optische Aufnahmeeinrichtung mindestens einen zeilenförmigen oder matrixförmigen bildgebenden Sensor aufweist. Geeignete bildgebende Sensoren können beispielsweise handelsübliche oder individuell angepasste CCD-Sensoren oder CMOS-Sensoren sein. Es ist ebenfalls möglich und gegebenenfalls vorteilhaft, weiterentwickelte Sensoren wie beispielsweise Active-Pixel-Sensoren oder Photodiodenarrays als bildgebende Sensoren zu verwenden. Die Auswertung der Bildinformationen eines zeilenförmigen bildgebenden Sensors ist auch bei hohen Geschwindigkeiten des Förderbands mit einem geringen apparativen Aufwand möglich. Mit einem matrixförmigen bildgebenden Sensor können mehrere Zeilen von tablettenförmigen Produkten gleichzeitig erfasst und beispielsweise durch einen Vergleich von mehreren zeitlich aufeinander folgenden Aufnahmen optisch kontrolliert werden. Die Auswertung von in digitaler Form vorliegenden Sensorwerten eines bildgebenden Sensors ist mit handelsüblichen Komponenten und in einfacher weise kostengünstig möglich. Eine einzelne optische Aufnahmeeinrichtung kann mehrere zeilenförmige oder matrixförmige bildgebende Sensoren aufweisen, deren Sensorinformationen zusammengeführt und gemeinsam erfasst werden. Es ist ebenfalls möglich, mehrere optische Aufnahmeeinrichtungen mit jeweils nur einem zeilenförmigen oder matrixförmigen bildgebenden Sensor entlang des Förderbands anzuordnen, um eine voneinander unabhängige optische Erfassung der auf dem Förderband beförderten tablettenförmigen Produkte zu ermöglichen und um dadurch gegebenenfalls die Genauigkeit der optischen Erfassung zu verbessern.

In besonders vorteilhafter Weise ist optional vorgesehen, dass die optische Aufnahmeeinrichtung derart ausgebildet und angeordnet ist, dass die auf dem Förderband in der Förderrichtung bewegten und in Rotationsbewegung versetzten tablettenförmigen Produkte über eine ausreichend lange Aufnahmedauer hinweg optisch aufgenommen werden, um eine sich über den gesamten Umfang erstreckende optische Aufnahme von den tablettenförmigen Produkten aufnehmen zu können. Zu diesem Zweck kann die optische Aufnahmeeinrichtung einen ausreichend großen Bildwinkel aufweisen. Eine stationär über dem Förderband angeordnete Aufnahmeeinrichtung, beispielsweise eine Kamera, erfasst dann einen Abschnitt des Förderbands in Förderrichtung. Dieser Abschnitt sollte zweckmäßigerweise ausreichend groß bemessen sein, sodass jedes tablettenförmige Produkt, welches auf dem Förderband in Förderrichtung durch diesen Abschnitt befördert wird, innerhalb des Abschnitts mindestens einmal vollständig um die Rotationsachse rotiert und dadurch jeder Oberflächenbereich des tablettenförmigen Produkts in Umfangsrichtung von der Aufnahmeeinrichtung erfasst wird. Es ist ebenfalls möglich, eine Aufnahmeeinrichtung mit einem zeilenförmigen Sensor verschwenkbar über dem Förderband anzuordnen und über eine ausreichend lange Aufnahmedauer mit den jeweils vorbeigeförderten tablettenförmigen Produkten mitzuführen, sodass jedes tablettenförmige Produkt zumindest über eine vollständige Rotationsbewegung hinweg von dem zeilenförmigen Sensor erfasst wird und dadurch jeder Oberflächenbereich in Umfangsrichtung überprüft werden kann. In Kombination mit seitlich angeordneten Spiegelelementen können auch die quer zu der optischen Aufnahmeeinrichtung ausgerichteten Oberflächenbereiche der tablettenförmigen Produkte mit der optischen Aufnahmeeinrichtung erfasst werden, sodass eine vollständige Überprüfung der sichtbaren Oberfläche der tablettenförmigen Produkte ermöglicht wird.

Optional kann vorgesehen sein, dass die automatisierte Fördereinrichtung eine Zähleinrichtung aufweist, mit welcher die auf dem Förderband beförderten tablettenförmigen Produkte gezählt werden. Die Zähleinrichtung kann ein integrierter Bestandteil der optischen Erfassungseinrichtung sein. Es ist ebenfalls möglich, dass die Zähleinrichtung beispielsweise durch die tablettenförmigen Produkte auf dem Förderband mechanisch abtastende Sensoren oder durch eine gesonderte Lichtschranke gebildet wird, die zwischen zwei benachbarten Rollen des Förderbands hindurchleuchtet und dabei die durch eine von den durch die Lichtschranke geförderten tablettenförmigen Produkte bewirkte Abschaltung erfassen und auswerten kann. Auch eine mechanische Zähleinrichtung ist denkbar, mit welcher beispielsweise schwenkbar gelagerte Messzungen von oben an die Oberseite des Förderbands heranragen und durch ein auf dem Förderband befördertes tablettenförmiges Produkt ausgelenkt und verschwenkt werden, was mit einer geeigneten Messeinrichtung erfasst und ausgewertet werden kann.

Im Hinblick auf eine hohe Förderkapazität ist gemäß einer optionalen Ausgestaltung des Erfindungsgedankens vorgesehen, dass die Aussonderungseinrichtung für jede auf dem Förderband gebildete Spur von tablettenförmigen Produkten ein zugeordnetes Aussonderungselement aufweist. Das Aussonderungselement kann beispielsweise eine Absaugeinrichtung mit einer unmittelbar über den spurenförmig entlang des Förderbands geförderten tablettenförmigen Produkten angeordneten Absaugöffnung aufweisen. Bei einem in der optischen Erfassungseinrichtung als fehlerhaft festgestellten tablettenförmigen Produkt wird das betreffende tablettenförmigen Produkt durch die zugeordnete Absaugeinrichtung von der Oberseite des Förderbands abgesaugt und einem neben dem Förderband angeordneten Behälter für fehlerhafte Produkte zugeführt. Die Absaugeinrichtung kann auch längs einer quer zur der Förderrichtung verlagerbaren Positioniereinrichtung angeordnet sein, sodass mit einer einzelnen Absaugöffnung die gesamte Förderbreite des Förderbands abgedeckt und fehlerhafte Produkte unabhängig von deren Spurenzugehörigkeit aus einer vorbeitransportierten Zeile des Förderbands abgesaugt und entnommen werden kann.

Einer vorteilhaften Ausgestaltung des Erfindungsgedankens zufolge ist vorgesehen, dass die Abfülleinrichtung für jede der auf dem Förderband beförderten Spuren von tablettenförmigen Produkte eine geeignete Portioniereinrichtung aufweist. Die Portioniereinrichtung kann für jede der Spuren einen geeigneten Klappen- oder Weichenmechanismus aufweisen, um die in einer Spur beförderten tablettenförmigen Produkte, die mit der optischen Erfassungseinrichtung oder mit einer gesonderten Zähleinrichtung gezählt wurden, in einer vorgebbaren Menge in einen der betreffenden Spur zugeordneten Abfüllbehälter abfüllen zu können. Es ist ebenfalls möglich, dass die Portioniereinrichtung eine Gewichtserfassungseinrichtung für jeden Abfüllbehälter aufweist, so dass die Portioniereinrichtung durch die Gewichtserfassungseinrichtung gesteuert oder geregelt werden kann, um eine vorgebbare Gewichtsmenge der tablettenförmigen Produkte in den betreffenden Abfüllbehälter einzufüllen. Die Klappen oder Weichen können mit einem geeigneten Betätigungsmechanismus automatisiert oder manuell betätigt und gesteuert werden. Die Portioniereinrichtung kann auch eine gesonderte optische Erfassungseinrichtung aufweisen, um unmittelbar vor dem Abfüllen der einzelnen tablettenförmigen Produkte eine Zählung oder eine optische Kontrolle der tablettenförmigen Produkte vorzunehmen.

Nachfolgend werden Ausführungsbeispiele für eine erfindungsgemäße Ausgestaltung einer automatisierten Fördereinrichtung näher beschrieben, die in der Zeichnung exemplarisch dargestellt sind. Es zeigt:
Figur 1 eine schematische Darstellung einer erfindungsgemäßen Ausgestaltung einer automatisierten Fördereinrichtung,
Figur 2 eine schematische Darstellung einer abweichend ausgestalteten, ebenfalls erfindungsgemäßen automatisierten Fördereinrichtung,
Figur 3 eine vergrößerte Detailansicht eines Ausschnitts des als Rollenband ausgestalteten Förderbands der automatisierten Fördereinrichtung, wobei mehrere tablettenförmige Produkte auf dem Rollenband angeordnet sind,
Figur 4 eine perspektivische Ansicht eines Ausschnitts des Förderbands, wobei durch die beabstandet angeordneten Rollen des Rollenbands einzelne Zeilen gebildet werden, in denen jeweils drei tablettenförmige Produkte nebeneinander angeordnet sind und drei in Förderrichtung gerichtete Spuren von tablettenförmigen Produkten auf dem Förderband bilden,
Figur 5 eine schematische Seitenansicht einer Aufgabeeinrichtung zur Aufgabe von einzelnen tablettenförmigen Produkten auf das Förderband,
Figur 6 eine schematische Schnittansicht durch einen Innenraum der Aufgabeeinrichtung mit einer spurenbildenden Separationseinrichtung,
Figur 7 eine Schnittansicht durch das Förderband im Bereich einer Aussonderungseinrichtung, und
Figur 8 eine schematische Schnittansicht durch einen Innenraum der Aufgabeeinrichtung mit einer aus mehreren unmittelbar über dem Förderband angeordneten Leitelementen bestehenden spurenbildenden Separationseinrichtung, die abweichend zu der in Figur 6 dargestellten spurenbildenden Separationseinrichtung ausgestaltet ist.

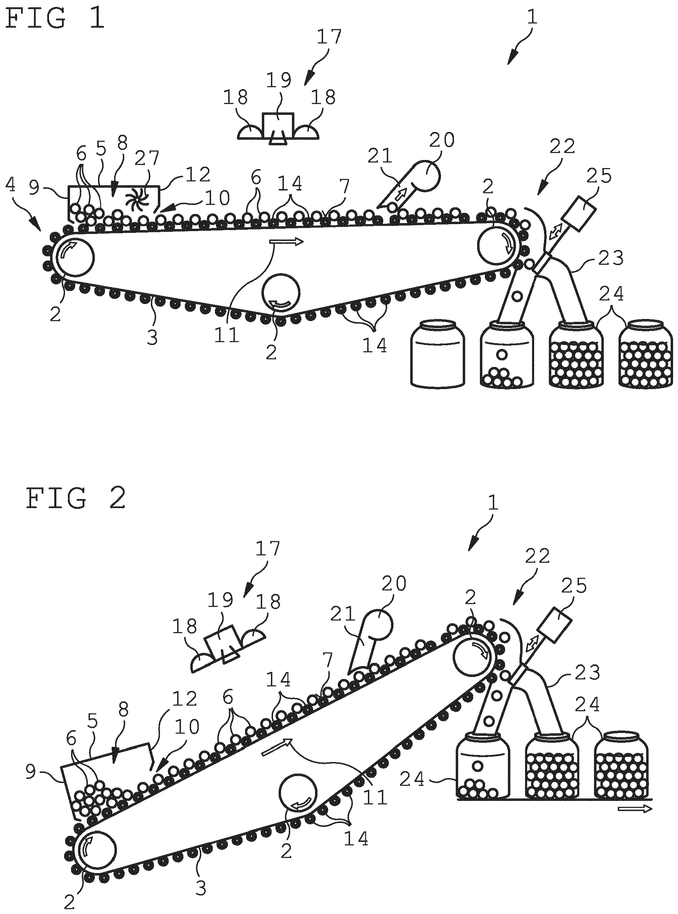

Eine in den Figuren 1 und 2 schematisch in einer Seitenansicht dargestellte automatisierte Fördereinrichtung 1 weist ein um drei Umlenkrollen 2 endlos umlaufendes Förderband 3 auf. An einem ersten Ende 4 des Förderbands 3 ist eine Aufgabeeinrichtung 5 zur Aufgabe von tablettenförmigen Produkten 6 auf eine Oberseite 7 des Förderbands 3 angeordnet. In einem Innenraum 8 der Aufgabeeinrichtung 5 befinden sich dabei zahlreiche tablettenförmige Produkte 6, die aufgrund von den Innenraum 8 an drei Seiten umgebenden Seitenwänden 9 nur durch eine schlitzförmige Ausnehmung 10 auf das Förderband 3 aufgegeben und weitergefördert werden können, wobei die schlitzförmige Ausnehmung 10 in einer einer Förderrichtung 11 des Förderbands 3 zugewandten Seitenwand 12 der Ausgabeeinrichtung 5 ausgebildet ist.

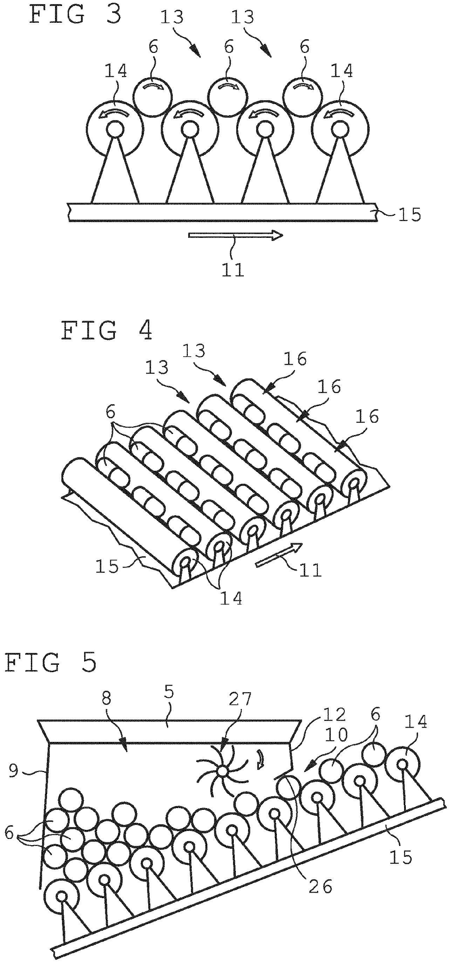

Bei dem Förderband 3 handelt es sich um ein zeilenbildenden Förderband 3, sodass mehrere tablettenförmige Produkte 6 in einer von dem Förderband 3 vorgegeben Zeile 13 quer zu der Förderrichtung 11 nebeneinander angeordnet sind. Die einzelnen Zeilen 13 werden durch ebenfalls quer zu der Förderrichtung 11 angeordnete Rollen 14 gebildet, die in der Förderrichtung 11 einen Abstand zueinander aufweisen, der kleiner als ein kleinster Durchmesser der tablettenförmigen Produkte 6 ist. Die auf einem flexiblen Transportband 15 angeordneten Rollen 14 sind drehbar gelagert und können durch einen geeigneten Antriebsmechanismus in Rotation versetzt werden. Durch eine gleichgerichtete Rotation benachbarter Rollen 14 des Förderbands 3 werden die zeilenförmig darauf angeordneten tablettenförmigen Produkte 6 ebenfalls in eine entgegengesetzt gerichtete Rotationsbewegung versetzt (Figur 3). Die zwischen zwei benachbarten Rollen 14 angeordneten Zeilen 13 der tablettenförmigen Produkte 6 weisen bei dem in Figur 4 dargestellten Ausführungsbeispiel drei nebeneinander angeordnete tablettenförmige Produkte 6 auf, die in der Förderrichtung 11 dementsprechend drei Spuren 16 von aufeinanderfolgenden tablettenförmigen Produkten 6 bilden.

Die auf dem Förderband 3 zeilenförmig und spurenförmig und demzufolge matrixförmig angeordneten tablettenförmigen Produkte 6 werden mit dem Förderband 3 unter einer optischen Erfassungseinrichtung 17 vorbeigefördert. Die optische Erfassungseinrichtung 17 weist in dem exemplarisch dargestellten Ausführungsbeispiel zwei Beleuchtungseinrichtungen 18 und eine zeilenförmige CMOS-Kamera 19 auf. Sowohl die Beleuchtungseinrichtungen 18 als auch die CMOS-Kamera 19 erstrecken sich über eine Förderbreite des Förderbands 3 und sind quer zu der Förderrichtung 11 ausgerichtet. Mit der optischen Erfassungseinrichtung 17 können die auf dem Förderband 3 daran vorbeigeförderten tablettenförmigen Produkte 6 gezählt werden. Zudem kann durch eine geeignete Auswertung der mit der CMOS-Kamera 19 aufgenommenen Abbildungsinformationen eine optische Kontrolle durchgeführt werden und überprüft werden, ob die einzelnen tablettenförmigen Produkte 6 vorgegebene Kriterien beispielsweise hinsichtlich ihrer Formgebungen und ihrer Farbgebungen erfüllen. Durch die Rotationsbewegungen der Rollen 14 werden die tablettenförmigen Produkte 6 ebenfalls in Rotation versetzt, sodass mit der CMOS-Kamera 19 die tablettenförmigen Produkte von allen Seiten aufgenommen und überprüft werden können.

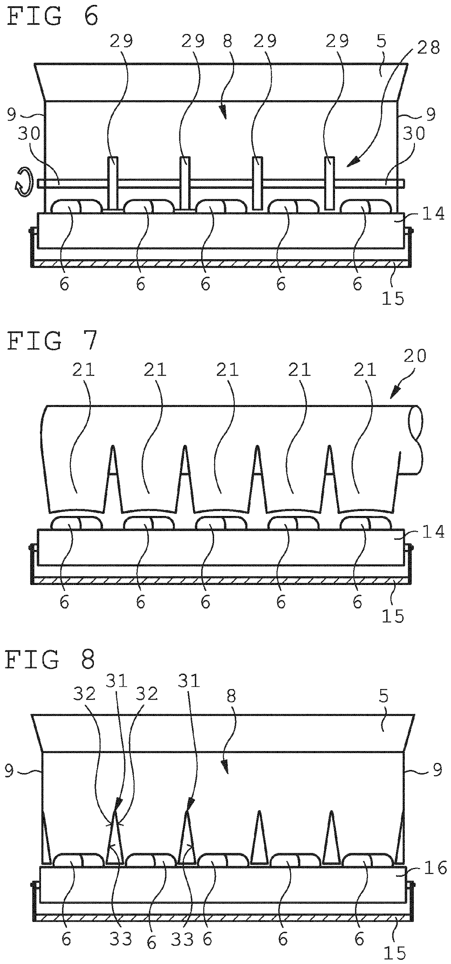

In der Förderrichtung 11 ist nach der optischen Erfassungseinrichtung 17 eine Aussonderungseinrichtung 20 angeordnet. Die in Figur 7 exemplarisch dargestellte Aussonderungseinrichtung 20 weist für jede Spur 16 eine gesonderte Absaugeinrichtung 21 auf, die in Abhängigkeit von der mit der optischen Erfassungseinrichtung 17 durchgeführten Qualitätskontrolle einzelne tablettenförmige Produkte 6, die von dem Förderband 3 unter der Aussonderungseinrichtung 20 vorbeigefördert werden, absaugen und von dem Förderband 3 entfernen kann. Die Aussonderungseinrichtung 20 ist in Figur 7 exemplarisch dargestellt.

Im Anschluss an die Aussonderungseinrichtung 20 ist an einem zweiten Ende 22 des Förderbands 3 eine Abfülleinrichtung 23 angeordnet, mit welcher eine vorgegebene Anzahl von tablettenförmigen Produkten 6 in einen dort bereitgehaltenen Abfüllbehälter 24 abgefüllt werden kann. Die Abfülleinrichtung 23 weist eine nicht näher dargestellte Portioniereinrichtung auf, mit welcher eine vorgegebene Menge an tablettenförmigen Produkten 6 in den jeweils zugeordneten Abfüllbehälter 24 eingefüllt werden kann. Dabei ist jeder einzelnen Spur 16 jeweils ein Klappen- oder Verteilmechanismus zugeordnet. Beispielsweise mit Hilfe einer von einer Steuereinrichtung der Portioniereinrichtung ansteuerbare und verschwenkbare Schwenkklappe oder über einen Verschlussschieber 25 kann von der Befüllung eines aktuell befüllten Abfüllbehälters 24 auf eine Befüllung eines nachfolgend zu befüllenden Abfüllbehälters 24 umgestellt werden, so dass bei einem kontinuierlich umlaufenden Förderband 3 jeder einzelne Abfüllbehälter 24 mit der vorgegebenen Anzahl oder Menge an tablettenförmigen Produkten 6 befüllt werden kann. Es können auch die Klappen- oder Verteilmechanismen mehrerer Spuren 16 zur Befüllung von jeweils einem Abfüllbehälter 24 kombiniert und die tablettenförmigen Produkte 6 mehrerer Spuren 16 zusammengeführt werden.

In den Figuren 5 und 6 sind verschiedene Ausführungsbeispiele der Aufgabeeinrichtung 5 exemplarisch dargestellt. Eine unmittelbar über der schlitzförmigen Ausnehmung 10 in der Seitenwand 12 angeordnete, nach innen abgewinkelte Blende 26 bildet eine Lagenvereinzelungseinrichtung, die bewirkt, dass ausschließlich eine unmittelbar auf der Oberseite 7 des Förderbands 3 aufliegende Lage von in den Zeilen 13 und in den Spuren 16 angeordneten tablettenförmigen Produkten 6 den Innenraum 8 der Aufgabeeinrichtung 5 auf dem Förderband 3 verlassen kann. Alle über dieser ersten Lage übereinander angeordneten Produkte 6 werden von der Blende 26 zurückgehalten. Die Blende 26 ist dabei höhenverstellbar über der schlitzförmigen Ausnehmung 10 an der Seitenwand 12 der Aufgabeeinrichtung 5 angeordnet, um eine einfache Anpassung an unterschiedlich große tablettenförmige Produkte 6 zu ermöglichen. Die zeilenförmige Anordnung mehrerer tablettenförmiger Produkte 6 nebeneinander auf dem Förderband 3 kann durch eine geeignete Ausgestaltung des Förderbands 3 vorgegeben und begünstigt werden. So kann das Förderband 3 wie in den Figuren 3 bis 7 exemplarisch dargestellt aus einem Rollenband mit mehreren nebeneinander angeordneten Rollen 14 bestehen, die auf einem flexiblen Transportband 15 drehbar gelagert angeordnet sind. Zusätzlich kann optional in dem Innenraum 8 der Aufgabeeinrichtung 5 eine drehbar gelagerte Bürstenwalze 27 so angeordnet und betrieben werden, dass nur die unmittelbar auf dem Förderband 3 in den einzelnen Zeilen 13 aufliegende Lage von tablettenförmigen Produkten 6 ungehindert aus der Aufgabeeinrichtung 5 austreten und mit dem Förderband 3 befördert werden kann, während darüber liegende tablettenförmige Produkte 6 von der Bürstenwalze 27 abgestreift und in dem Innenraum 8 des Aufgabebehälters 5 zurückgehalten werden.

Die spurenförmige Anordnung der in einer Zeile 13 nebeneinander angeordneten tablettenförmigen Produkte 6 kann durch eine geeignete spurenbildenden Separationseinrichtung 28 vorgegebenen werden. Bei dem in Figur 6 exemplarisch dargestellten Ausführungsbeispiel wird die Separationseinrichtung 28 durch mehrere Kreisscheiben 29 gebildet, die auf einer Welle 30 drehbar gelagert sind und den von den äußeren Seitenwänden 9 begrenzten Innenraum 8 der Aufgabeeinrichtung 5 in fünf Spuren 16 unterteilen. Durch eine Rotationsbewegung der auf der Welle 30 angeordneten Kreisscheiben 29 wird die spurenförmige Anordnung der tablettenförmigen Produkte 6 auf dem Förderband 3 vorgegeben und begünstigt. An Stelle der rotierenden Kreisscheiben 29 können auch ortsfest in dem Innenraum 8 in der Aufgabeeinrichtung 5 angeordnete Leitbleche oder Trennelemente angeordnet sein, die bis unmittelbar an die Oberseite 7 des Förderbands 3 heranragen und die zunächst in dem Innenraum 8 der Aufgabeeinrichtung 5 ungeordnet angeordneten tablettenförmigen Produkte 6 in einzelne Spuren 16 aufteilen und entsprechend auf dem Förderband 3 positionieren. In Figur 8 ist exemplarisch eine abweichend zu Figur 6 ausgestaltete Separationseinrichtung 28 in dem Innenraum 8 der Aufgabeeinrichtung 5 dargestellt. Die Spurbildung der einzelnen Spuren 16 von tablettenförmigen Produkten 6 wird durch prismenförmige Leitelemente 31 mit einer dreieckigen Querschnittsfläche bewirkt, die sich in Förderrichtung 11 erstrecken. Zwischen zwei quer zu der Förderrichtung 11 angeordneten benachbarten Leitelementen 31 kann jeweils nur ein einzelnes tablettenförmiges Produkt 6 auf dem Förderband 3 aufliegen und von dem Förderband 3 befördert werden.

Derartige Leitelemente 31 können auch beabstandet zu der Aufgabeeinrichtung 5 entlang des Förderwegs des Förderbands 3 angeordnet sein, um eine erneute Kontrolle und gegebenenfalls Ausrichtung der einzelnen Spuren 16 von tablettenförmigen Produkten 6 auf dem Förderband 3 zu bewirken. Die den tablettenförmigen Produkten 6 zugewandten Oberflächen 32 der Leitelemente 31 können verspiegelt sein, so dass ein Spiegelbild von quer zu der Förderrichtung 11 ausgerichteten Endkappen 33 der tablettenförmigen Produkte 6 nach oben projiziert und mit einer darüber angeordneten optischen Aufnahmeeinrichtung 19 aufgenommen werden kann, um auch die seitlich angeordneten Endkappen 33 der tablettenförmigen Produkte 6 kontrollieren und überprüfen zu können.

## Patentansprüche

1. Automatisierte Fördereinrichtung (1) für tablettenförmige Produkte (6), beispielsweise Süßwaren, pharmazeutische Tabletten oder Kapseln, mit einem zeilenbildenden Förderband (3), auf welchem die tablettenförmigen Produkte in voneinander getrennten Zeilen (13) quer zu einer Förderrichtung (11) des Förderbands (3) gelagert und in Förderrichtung (11) transportiert werden, mit einer an einem ersten Ende (4) des Förderbands (3) angeordneten Aufgabeeinrichtung (5) zum Aufgeben der tablettenförmigen Produkte (6) auf das Förderband (3), mit einer optischen Erfassungseinrichtung (17) zur automatisierten Erfassung einzelner tablettenförmiger Produkte (6) auf dem Förderband (3) und mit einer an einem dem ersten Ende (4) gegenüberliegenden zweiten Ende (22) des Förderbands (3) angeordneten Abfülleinrichtung (23), mit welcher die tablettenförmigen Produkte (6) von dem Förderband (3) in einen Abfüllbehälter (24) überführt werden können, wobei die Aufgabeeinrichtung (5) eine an eine Oberseite (7) des Förderbands (3) angrenzende Aufgabeöffnung aufweist, die sich quer zu der Förderrichtung (11) des Förderbands (3) erstreckt und durch welche die tablettenförmigen Produkte (6) auf die Oberseite (7) des Förderbands (3) aufgegeben werden können, wobei die Aufgabeeinrichtung (5) eine spurenbildende Separationseinrichtung (28) aufweist, mit welcher die tablettenförmigen Produkte (6) in mehreren Spuren (16) nebeneinander auf die Oberseite (7) des Förderbands (3) aufgegeben werden, und wobei in Förderrichtung (11) nach der optischen Erfassungseinrichtung (17) eine Aussonderungseinrichtung (20) angeordnet ist, **dadurch gekennzeichnet, dass** das Förderband (3) ein Rollenband mit quer zur Förderrichtung (11) ausgerichteten und in Förderrichtung (11) beabstandeten drehbar gelagerten Rollen (14) aufweist, wobei ein Abstand zwischen zwei benachbarten Rollen (14) geringer als ein kleinster Durchmesser der zu fördernden tablettenförmigen Produkte (6) ist, dass die Rollen (14) während einer Förderbewegung des Förderbands (3) in einer Rotationsrichtung antreibbar sind, so dass durch eine Rotationsbewegung der Rollen (14) die darauf angeordneten tablettenförmigen Produkte (6) in eine entgegengesetzte Rotationsbewegung versetzt werden, und dass mit der Aussonderungseinrichtung (20) einzelne tablettenförmige Produkte (6) von dem Förderband (3) ausgesondert werden können, wobei die Aussonderungseinrichtung (20) für jede auf dem Förderband (3) gebildete Spur (16) von tablettenförmigen Produkten (6) ein zugeordnetes Aussonderungselement aufweisen kann.

2. Automatisierte Fördereinrichtung (1) nach Anspruch 1, **dadurch gekennzeichnet, dass** die optische Aufnahmeeinrichtung derart ausgebildet und angeordnet ist, dass die auf dem Förderband (3) in der Förderrichtung (11) bewegten und in Rotationsbewegung versetzten tablettenförmigen Produkte (6) über eine ausreichend lange Aufnahmedauer hinweg optisch aufgenommen werden, um eine sich über den gesamten Umfang erstreckende optische Aufnahme von den tablettenförmigen Produkten (6) aufnehmen zu können.

3. Automatisierte Fördereinrichtung (1) nach Anspruch 1 oder Anspruch 2, **dadurch gekennzeichnet, dass** die optische Erfassungseinrichtung (17) mindestens eine quer zu der Förderrichtung (11) des Förderbands (3) angeordnete und sich über eine Förderbreite des Förderbands (3) erstreckende optische Aufnahmeeinrichtung aufweist.

4. Automatisierte Fördereinrichtung (1) nach einem der vorangehenden Ansprüche, **dadurch gekennzeichnet, dass** die optische Erfassungseinrichtung (17) mindestens eine seitlich neben dem Förderband (3) angeordnete weitere optische Aufnahmeeinrichtung oder eine Spiegeleinrichtung (32) aufweist, mit welcher eine optische Erfassung der auf dem Förderband (3) beförderten tablettenförmigen Produkte aus einem seitlichen Blickwinkel ermöglicht wird.

5. Automatisierte Fördereinrichtung (1) nach einem der vorangehenden Ansprüche, **dadurch gekennzeichnet, dass** die mindestens eine optische Aufnahmeeinrichtung mindestens einen zeilenförmigen oder matrixförmigen bildgebenden Sensor (19) aufweist.

## Claims

1. Automated conveying device (1) for tablet-shaped products (6), for example confectionery products, pharmaceutical tablets or capsules, having a row-forming conveyor belt (3), on which the tablet-shaped products (6) are supported in separate rows (13) transversely to a conveying direction (11) of the conveyor belt (3) and are transported in the conveying direction (11), having a feeding device (5), arranged at a first end (4) of the conveyor belt (3), for feeding the tablet-shaped products (6) onto the conveyor belt (3), having an optical detection device (17) for the automated detection of individual tablet-shaped products (6) on the conveyor belt (3), and having a filling device (23), arranged at a second end (22) of the conveyor belt (3) opposite the first end (4), by means of which filling device the tablet-shaped products (6) can be transferred from the conveyor belt (3) into a filling container (24), wherein the feeding device (5) comprises a feeding opening, which is adjacent to an upper side (7) of the conveyor belt (3) and which extends transversely to the conveying direction (11) of the conveyor belt (3) and can be used to feed the tablet-shaped products (6) onto the upper side (7) of the conveyor belt (3), wherein the feeding device (5) comprises a track-forming separation device (28), by which the tablet-shaped products (6) are fed side-by-side, in a plurality of tracks (16), onto the upper side (7) of the conveyor belt (3), and wherein a sorting device (20) is arranged after the optical detection device (17) in the conveying direction (11), **characterised in that** the conveyor belt (3) comprises a roller belt having rotatably mounted rollers (14) which are oriented transversely to the conveying direction (11) and are spaced apart in the conveying direction (11), wherein the spacing between two adjacent rollers (14) is less than the smallest diameter of the tablet-shaped products (6) to be conveyed, **in that** the rollers (14) can be driven in a rotation direction, during the conveying movement of the conveyor belt (3), such that a rotational movement of the rollers (14) causes the tablet-shaped products (6) arranged thereon to perform rotational movement in the opposite direction, and **in that** individual tablet-shaped products (6) can be removed from the conveyor belt (3) by means of the sorting device (20), wherein the sorting device (20) can comprise an associated sorting element for each track (16) of tablet-shaped products (6) formed on the conveyor belt (3) .

2. Automated conveying device (1) according to claim 1, **characterised in that** the optical recording device is configured and arranged in such a way that the tablet-shaped products (6) moved on the conveyor belt (3) in the conveying direction (11) and made to perform a rotational movement are optically recorded for a sufficiently long recording time to be able to make an optical recording of the tablet-shaped products (6) that extends over the entire periphery.

3. Automated conveying device (1) according to claim 1 or 2, **characterised in that** the optical detection device (17) comprises at least one optical recording device arranged transversely to the conveying direction (11) of the conveyor belt (3) and extending over a conveying width of the conveyor belt (3).

4. Automated conveying device (1) according to one of the preceding claims, **characterised in that** the optical detection device (17) comprises at least one further optical recording device or a mirror device (32) arranged laterally next to the conveyor belt (3), by means of which further optical recording device or mirror device it is possible to optically detect the tablet-shaped products, conveyed on the conveyor belt (3), from a lateral viewing angle.

5. Automated conveying device (1) according to one of the preceding claims, **characterised in that** the at least one optical recording device comprises at least one row-like or matrix-like imaging sensor (19).

## Revendications

1. Dispositif de convoyage automatisé (1) pour des produits se présentant sous forme de comprimés (6), par exemple des confiseries, des comprimés ou des capsules pharmaceutiques, lequel dispositif présente une bande de convoyage (3) formant des lignes, sur laquelle les produits se présentant sous forme de comprimés sont montés en des lignes (13) séparées les unes des autres de manière transversale par rapport à une direction de convoyage (11) de la bande de convoyage (3) et sont transportés dans la direction de convoyage (11), avec un dispositif de distribution (5) disposé sur une première extrémité (4) de la bande de convoyage (3) pour distribuer les produits se présentant sous forme de comprimés (6) sur la bande de convoyage (3), avec un dispositif de détection optique (17) pour la détection automatisée de divers produits se présentant sous forme de comprimés (6) sur la bande de convoyage (3) et avec un dispositif de transvasement (23) disposé sur une seconde extrémité (22), faisant face à la première extrémité (4), de la bande de convoyage (3), avec lequel les produits se présentant forme de comprimés (6) peuvent être transférés depuis la bande de convoyage (3) dans un contenant de transvasement (24), dans lequel le dispositif de distribution (5) présente une ouverture de distribution jouxtant un côté supérieur (7) de la bande de convoyage (3), qui s'étend de manière transversale par rapport à la direction de convoyage (11) de la bande de convoyage (3) et par laquelle les produits se présentant sous forme de comprimés (6) peuvent être distribués sur le côté supérieur (7) de la bande de convoyage (3), dans lequel le dispositif de distribution (5) présente un dispositif de séparation (28) formant des voies, avec lequel les produits se présentant sous forme de comprimés (6) sont distribués côte à côte sur le côté supérieur (7) de la bande de convoyage (3) en plusieurs voies (16), et dans lequel un dispositif de tri (20) est disposé dans la direction de convoyage (11) après le dispositif de détection optique (17), **caractérisé en ce que** la bande de convoyage (3) présente une bande à rouleaux avec des rouleaux (14) montés de manière à pouvoir tourner orientés de manière transversale par rapport à la direction de convoyage (11) et tenus à distance dans la direction de convoyage (11), dans lequel un espacement entre deux rouleaux (14) adjacents est plus petit qu'un diamètre le plus petit des produits se présentant sous forme de comprimés (6) à convoyer, que les rouleaux (14) peuvent être entraînés dans une direction de rotation pendant un déplacement de convoyage de la bande de convoyage (3) de sorte que les produits se présentant sous forme de comprimés (6) disposés sur les rouleaux (14) sont amenés par un mouvement de rotation de ceux-ci dans un mouvement de rotation opposé, et que divers produits se présentant sous forme de comprimés (6) peuvent être triés par la bande de convoyage (3) avec le dispositif de tri (20), dans lequel le dispositif de tri (20) peut présenter pour chaque voie (16), formée sur la bande de convoyage (3), de produits se présentant sous la forme de comprimés (6) un élément de tri associé.

2. Dispositif de convoyage automatisé (1) selon la revendication 1, **caractérisé en ce que** le dispositif d'enregistrement optique est réalisé et est disposé de telle manière que les produits se présentant sous forme de comprimés (6) déplacés sur la bande de convoyage (3) dans la direction de convoyage (11) et amenés dans un mouvement de rotation sont enregistrés de manière optique au-delà d'une durée d'enregistrement suffisamment longue pour pouvoir enregistrer un enregistrement optique, s'étendant sur la totalité de la périphérie, des produits se présentant sous forme de comprimés (6) .

3. Dispositif de convoyage automatisé (1) selon la revendication 1 ou la revendication 2, **caractérisé en ce que** le dispositif de détection optique (17) présente au moins un dispositif d'enregistrement optique disposé de manière transversale par rapport à la direction de convoyage (11) de la bande de convoyage (3) et s'étendant sur une largeur de convoyage de la bande de convoyage (3).

4. Dispositif de convoyage automatisé (1) selon l'une quelconque des revendications précédentes, **caractérisé en ce que** le dispositif de détection optique (17) présente au moins un autre dispositif d'enregistrement disposé latéralement à côté de la bande de convoyage (3) ou un dispositif de miroir (32), avec lequel une détection optique des produits se présentant sous forme de comprimés convoyés sur la bande de convoyage (3) est rendue possible depuis un angle d'observation latéral.

5. Dispositif de convoyage automatisé (1) selon l'une quelconque des revendications précédentes, **caractérisé en ce que** l'au moins un dispositif d'enregistrement optique présente au moins un capteur générateur d'images (19) en forme de ligne ou en forme de matrice.
